# EUROPEAN PATENT SPECIFICATION

(11) **EP 0 374 548 B1**
(45) Date of publication and mention of the grant of the patent: **08.11.1995**
(21) Application number: 89122217.6
(22) Date of filing: 01.12.1989
(51) Int. Cl.: H04N 7/26

(54) **System for package multiplexing in transmission of data streams generated by the same algorithm**
System zum Multiplexieren von Paketen bei der Übertragung von mittels des gleichen Algorithmus erzeugten Datenflüssen
Système de multiplexage par paquets lors de la transmission de débits de données engendrés par le même algorithm

(30) Priority: 21.12.1988 IT 2303688
(43) Date of publication of application: 27.06.1990
(73) Proprietor: ALCATEL ITALIA Società per Azioni, 20149 Milano (IT)
(72) Inventor: Cucchi, Silvio, I-20093 Gaggiano (MI) (IT); Barbero, Marzio, I-10100 Torino (IT)
(74) Representative: Strehl Schübel-Hopf Groening & Partner

(56) References cited:
- EP-A- 0 271 866
- EP-A- 0 309 280
- DE-A- 3 029 190
- IEEE GLOBAL TELECOMMUNICATIONS CONFERENCE & EXHIBITION, Hollywood, FL, 28th November - 1st December 1988, vol. 2, pages 633-639; K. JOSEPH et al.: "Packet video transmission over a broadband implicit token passing LAN"
- EBU REVIEW/TECHNICAL, no. 230, August 1988, pages 182-186, Brussel, BE; W. BARTEL et al.: "ATD - a new multiplex process for the future broadband ISDN"
- IEEE/IEICE GLOBAL TELECOMMUNICATIONS CONFERENCE 1987, CONFERENCE RECORD, Tokyo, 15th - 18th November 1987, vol. 1, pages 36-39; S. OKUBO et al.: "Progress of CCITT standardization on n x 384 kbit/s video codec"
- IEEE JOURNAL ON SELECTED AREAS IN COMMUNICATIONS, vol. 6, no. 9, December 1988, pages 1538-1544, New York, US; M. DE PRYCKER: "Definition of network options for the Belgian ATM broadband experiment"
- SYMPOSIUM RECORD ON THE BROADCAST SESSIONS OF THE 16TH INTERNATIONAL TV SYMPOSIUM, Montreaux, 17th - 22nd June 1989, pages 410-420; G. BARBIERI et al.: "A modular and flexible video codec architecture for application to TV and HDTV"
- IEEE GLOBAL TELECOMMUNICATIONS CONFERENCE & EXHIBITION, Hollywood, FL, 28th November - 1st December 1988, vol. 2, pages 767-772; H.J. CHAO et al.: "A packet video system using the dynamic time division multiplexing technique"
- IEEE TRANSACTIONS ON COMMUNICATIONS, vol. 36, no. 7, July 1988, pages 834-842; B. MAGLARIS et al.: "Performance models of statistical multiplexing in packet video communications"
- IEEE TRANSACTIONS ON COMMUNICATIONS, vol. COM-35, no. 6, June 1987, pages 637- 645; H. MURAKAMI et al.: "15/30 Mbit/s universal digital TV codec using a median adaptive predictive coding method"
- GLOBECOM 1985 IEEE GLOBAL TELECOMMUNICATIONS CONFERENCE, New Orleans, 2nd - 5th December 1985, vol. 1, pages 363-367; L. CHIARIGLIONE et al.: "Multimedia communication at the basic ISDN access"

## Description

The present invention relates to a system for the transmission of e.g. a video signal coming from a source and processed by means of an algorithm which, to minimise the data to be transmitted (values and parameters) and then reduce the bands necessary for transmission or storage, generates values that can be encoded and then multiplexed or stored.

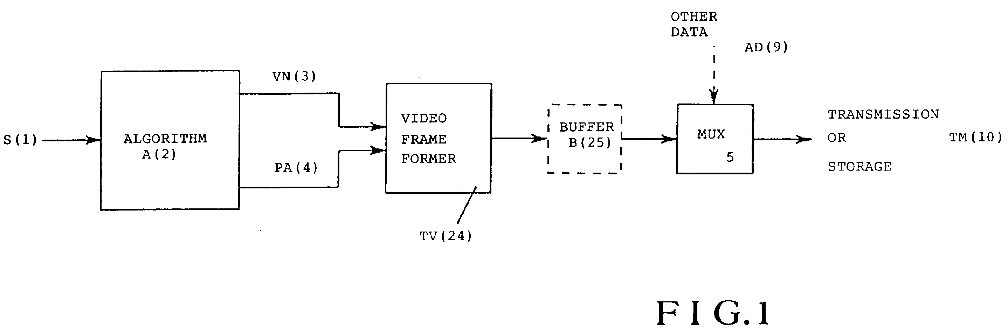

Digital transmission systems for television signals generally use algorithms for redundancy reduction which mainly aim at reducing the volume of data to be transmitted with respect to the quantity of data generated by the video source. These systems, particularly those of the adaptive type (see Figure 1), generate two data streams, when an algorithm A(2) is applied to the source of the television signal S(1). The first data stream VN(3), generally encoded with variable length, corresponds to the video source signal subjected to the algorithm processing; the second data stream PA(4) describes the manner in which the algorithm used for redundancy reduction has processed the video source signal within each half-frame or suitable blocks in which the video signal was subdivided, and further information relating to the correspondence among the encoded data VN(3) and the blocks in which the source signal was divided, among other data.

To transmit the information generated by the algorithm (VN(3)+PA(4)) according to prior-art techniques, a video frame former TV(24) is used that alternately processes the signals VN(3) corresponding to the single video information, which have synchronisation words or special words delimiting the video data blocks inserted at suitable intervals, and the ancillary data PA(4) which describe, for suitable blocks of video signal points (at an upper limit, the whole television half-frame) the parameters of data that describe the condition of the mechanism used for redundancy reduction. Therefore, the prior-art techniques utilise a video frame former TV(24) which mixes two data streams VN(3) and PA(4) into a single data stream, and apply particular provisions so that, during reception, it is possible to separate the two data streams. These provisions are simpler if the alternation between VN(3) and PA(4) is made at each half-frame, but in this case, disadvantageously a whole television half-frame must be stored before that all lateral data are known and available for transmission. Further, according to prior-art techniques, the information stream generated by TV(24) is generally sent to a buffer B(25) and a multiplexer MUX 5 that generates a frame including further data AD(9) (e.g. audio channels) and an error correction code, for transmitting or storing all information.

The general technique of packetising several separate data streams for subsequent multiplexing is known in the field of data communication, specifically in connection with video transmission; compare IEEE GLOBAL TELECOMMUNICATIONS CONFERENCE & EXHIBITION, Hollywood, FL, 28th November - 1st December 1988, vol. 2, pages 767-772: IEEE TRANSACTIONS ON COMMUNICATIONS, vol. 36, No. 7, July 1988, pages 834-842: and GLOBECOM 1985, IEEE GLOBAL TELECOMMUNICATIONS CONFERENCE, New Orleans, 2nd - 5th December 1985, vol. 1, pages 363-367.

It is an object of the present invention to provide a data packet transmission system which is less sensitive to transmission errors, yet allows implementation by comparatively inexpensive circuitry. This object is met by the system set forth in claim 1.

The present invention will become apparent from the following description in conjunction with the accompanying drawings, in which:
- Figure 1: shows the prior art system for transmitting television signals discussed above;
- Figure 2: illustrates the preferred embodiment of the present invention; and
- Figure 3: shows a block of information transmitted with the system of the present invention.

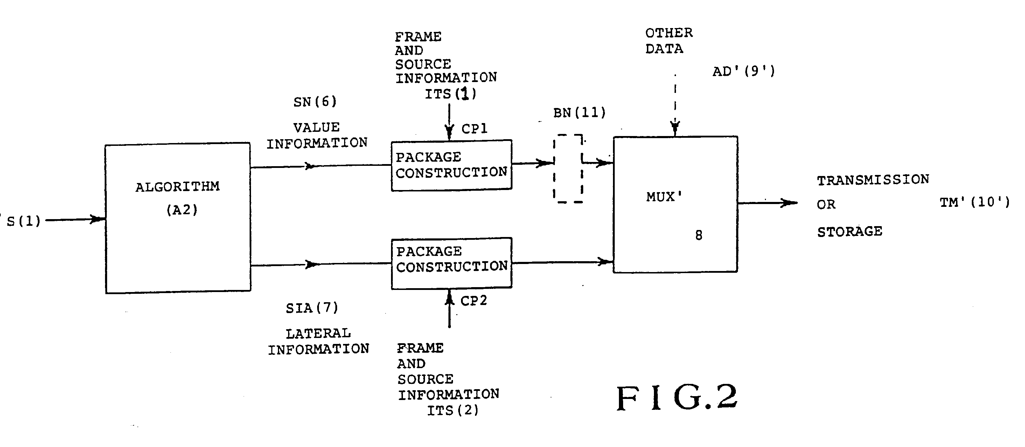

As shown in Figure 2, the lateral information SIA(7) and the value information SN(6) follow separate paths and are mixed within a multiplexer MUX′ 8 that is provided on the transmission or storage line. It can be seen in Figure 2 that the source data values SN(6) and ancillary lateral information values SIA(7), before entering the multiplexer MUX′ 8, are each subjected to a pre-processing named "package construction" CP1, respectively CP2 which involves substantially the following operations:
(1) subdividing the information into parts having the same length for forming the packages CP1;
(2) adding the source and frame information ITS(1) and ITS(2) to each package CP1 and CP2, respectively, so that the meaning of the transmitted information can be recognised at reception;
(3) adding to the packages CP1 and CP2 information necessary for its management (not shown).

The packages CP1, CP2, which are formed in this manner, enter a multiplexer MUX′ 8, which may be implemented by any well known technique, carries out the data transmission or the storage T/M′(10′) after other necessary or optional data AD′(9′), as shown in Figure 1 at AD(9), have been added.

It must be emphasised that the package CP2 is transmitted with priority as soon as the source SIA(7) has generated a sufficient amount of data to fill one package, so that this priority information is available at the reception in advance of the information SN(6), which is generally subjected to a transmission delay via a buffer BN(11) that further suspends the transmission of packages CP1 when the transmission of packages CP2 is required with priority.

The packages corresponding to the lateral data are introduced into the frame of the line multiplexer in predetermined positions, or they are fixed with respect to the frame to simplify their extraction from the reception multiplexer.

Figure 2 shows that the construction of packages is made for both data streams SN(6) and SIA(7), as this is the preferred embodiment of the invention, even if it is generally sufficient to packetise only the data SIA(7) to obtain the great advantage of avoiding mixing of the data.

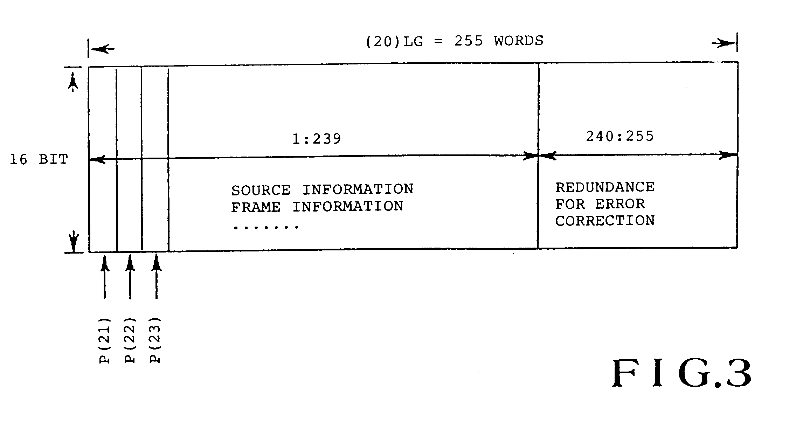

Further, if an error correction code for protecting the source signal is used, and this code generates a data block, such data block can be used in an efficient manner as a data package (see e.g. W.W. Peterson and E.U. Woldon, "Error Correcting Codes", Second Edition, MIT Press). For example, if BCH code (Base-Chaudhuri-Hocquenghem) (239, 255) is used with interleaving 16, a structure can be provided which is similar to that represented in Figure 3 for defining the package. Figure 3 shows the information block corresponding to the BCH block (239, 255) with interleaving 16.

In the case shown, the block is made up of 255 words (code length = LG), each word P(21) being formed of 16 bits. Among these 255 words, 16 words are typically used for the redundancy information necessary for error correction. The other 239 available words are the specific information (values or lateral information), the source information, the frame information and the other information necessary for the package management. For example, the first word P(21) can be used for recognising the type of source signal, for example SN(6) or SIA(7); the second word P(22) can be used for recognising the first information transmitted in the package; the third word P(23) can be a buffer padding (if present); the fourth the package numbering, if necessary. All information coming from the source are successively written into the package until it is full.

The system of the embodiment shown in Figure 2 has many advantages with respect to the classic structures (e.g. the one of Figure 1) in that:
(1) it avoids mixing of data with different meaning (values and lateral information), thus making the data streams completed in the above manner resistant to errors;
(2) it allows, during the reconstruction phase, an easy assignment of the data, as the source and frame information is associated to each package, without needing complex frames;
(3) it allows an easy adaptation of the system to various transmission or storage speeds, although data streams of constant speed (e.g. lateral information) and data streams of a variable speed occur at the multiplexer input.

The "package constructors" CP1 and CP2 used in the invention can be made using prior-art techniques and very simple conventional means, for example a dual-port RAM and a memory controller. The controller emits the data coming from the algorithm in the dual-port RAM, inserts frame and management information at predetermined positions the package source and transfers the packages successively to the buffer or directly to the multiplexer. The controller can be made with registers and flip-flops or, using a more advanced implementation, with a program-controlled microprocessor which carries out the management of the dual-port RAM, where the package is stored before being transmitted to the multiplexer or to the buffer. Alternatively, if the speed of data stream allows, the RAM can be made of a standard RAM.

## Claims

1. A system for transmitting a signal (S1) from a signal source, including means for processing the signal with a redundancy reduction algorithm (A2), thereby forming at least two data streams (SN6, SIA7), one representing value information of the signal and another one representing lateral information relating to the algorithm used, means for encoding the data streams, and means (8) for multiplexing the data prior to transmission or storage, characterised in that each of the two data streams formed from the same signal by said algorithm processing is separately ordered in packages (CP1, CP2) with the addition of information necessary to define the source, frame and management of each package, and that the sequences of packages thus formed are supplied to said multiplexing means (8).

2. The system of claim 1 wherein, in forming said packages, an error correction code is used which is in the form of a block code predetermined for all data streams.

## Patentansprüche

1. System zum Übertragen eines Signals (S1) von einer Signalquelle, mit einer Einrichtung zur Verarbeitung des Signals mit einem redundanz-verringernden Algorithmus (A2) unter Bildung mindestens zweier Datenströme (SN6, SIA7), von denen einer Wert-Informationen des Signals und ein weiterer Seiteninformationen bezüglich des verwendeten Algorithmus wiedergibt, einer Einrichtung zum Codieren der Datenströme und einer Einrichtung (8) zur Multiplex-Verarbeitung der Daten vor der Übertragung oder Speicherung, dadurch **gekennzeichnet**, daß jeder der beiden durch die Algorithmus-Verarbeitung aus demselben Signal gebildeten Datenströme unter Zusatz von Informationen, die zur Definition von Quelle, Rahmen und Verwaltung jedes Pakets erforderlich sind, getrennt in Pakete (CP1, CP2) geordnet wird, und daß die so gebildeten Paketsequenzen der Multiplexeinrichtung (8) zugeführt werden.

2. System nach Anspruch 1, wobei bei der Bildung der Pakete ein Fehlerkorrekturcode in Form eines für alle Datenströme vorgegebenen Blockcodes angewendet wird.

## Revendications

1. Système pour transmettre un signal (S1) depuis une source de signal, comprenant un moyen pour traiter le signal par un algorithme (A2) de réduction de redondance, en formant de ce fait au moins deux trains (SN6, SIA7) de données, un premier représentant des informations de valeur du signal et un autre représentant des informations latérales qui concernent l'algorithme utilisé, un moyen pour coder les trains de données, et un moyen (8) pour multiplexer les données avant la transmission ou le stockage, caractérisé en ce que chacun des deux trains de données formés à partir du même signal par ledit traitement par algorithme est ordonné séparément en paquets (CP1, CP2) avec l'apport d'informations nécessaires pour définir la source, le format et la gestion de chaque paquet, et en ce que les suites de paquets ainsi formées sont fournies audit moyen de multiplexage (8).

2. Système selon la revendication 1, dans lequel, lors de la formation desdits paquets, on utilise un code de correction d'erreur sous la forme d'un code complet prédéterminé pour tous les trains de données.
